# EUROPÄISCHE PATENTSCHRIFT

(11) **EP 2 564 077 B1**
(45) Veröffentlichungstag und Bekanntmachung des Hinweises auf die Patenterteilung: **24.08.2016**
(21) Anmeldenummer: 11719183.3
(22) Anmeldetag: 27.04.2011
(51) Int. Cl.: F16B 21/06

(54) **BAUTEIL FÜR EINEN KRAFTWAGEN**
COMPONENT FOR A MOTOR VEHICLE
ELÉMENT POUR UN VÉHICULE AUTOMOBILE

(30) Priorität: 28.04.2010 DE 102010018622
(43) Veröffentlichungstag der Anmeldung: 06.03.2013
(73) Patentinhaber: Audi AG, 85045 Ingolstadt (DE)
(72) Erfinder: HAMPEL, Thomas, 85055 Ingolstadt (DE)
(74) Vertreter: Wohnert, Dietmar
(86) Internationale Anmeldenummer: PCT/EP2011/002108
(87) Internationale Veröffentlichungsnummer: WO 2011/134649

(56) Entgegenhaltungen:
- EP-A1- 0 044 985
- EP-A2- 1 265 022
- DE-A1- 10 146 565
- DE-C1- 4 134 201
- FR-A1- 2 941 751

## Beschreibung

Die Erfindung betrifft ein Rohr zum Verbauen in einem Kraftwagen mit einem Wandbereich und mit elastisch voneinander weg spreizbaren Halteschenkeln, die mit dem Wandbereich fest verbunden sind.

Es ist üblich, Bauteile für Kraftwägen, z. B. Saugrohre für Motoren, aus Kunststoff zu fertigen. An diesen Bauteilen müssen häufig andere Kraftfahrzeugkomponenten, wie z. B. Schläuche, Leitungen und Sensoren einfach und sicher befestigt werden. Dies geschieht normalerweise mit Clipverbindungen und die Clipse bzw. Clipschenkel sind hierfür am Bauteil angespritzt. Die einstückige Ausführung des Bauteils mit den Clipschenkeln im Spritzgussverfahren ist zwar kostengünstig, hat jedoch den Nachteil, dass ein abgebrochener Clipschenkel nicht ohne Weiteres ausgetauscht werden kann. Es ist dann üblich, das gesamte Bauteil zu ersetzen, obwohl der Defekt nur minimal ist und sich durch einen neuen Clipschenkel beheben ließe. Ein Austausch des gesamten Bauteils ist dabei nicht immer die ökonomischste Lösung.

Aus der DE 101 46 565 A1 ist ein Befestigungselement bekannt, das sich in einer Öffnung mit Innengewinde fixieren lässt. Hierzu ist das Befestigungselement mit einem zylinderförmigen Schaft ausgebildet, welcher radial umlaufende Krägen aufweist. Hierdurch weist das Befestigungselement im Längsschnitt ein Tannenbaumprofil auf, das seine dübelartige Verankerung in der Öffnung bewirkt.

Aus der DE 198 52 307 A1 ist eine Halteeinrichtung für strangförmige Gegenstände bekannt. In ihr werden Leitungen, Kabel, Drähte usw. in einer mit einem Spreizdübel versehenen U-förmigen Schale dadurch fixiert, dass die offene Seite der Schale von einem elastischen Band umschlungen wird. Die gesamte Halteeinrichtung dient der Montage der strangförmigen Gegenstände an einer Kraftwagenkarosserie.

Die deutsche Patentschrift DE 41 34 201 C1 zeigt eine Schnappeinrichtung an einem Innenverkleidungsteil eines Kraftfahrzeugs, welche reversibel betätigt werden kann, indem auf einem an die Schnappeinrichtung formschlüssig koppelbaren Befestigungselement ein verschiebbares Öffnungsteil vorgesehen wird, welches die Spanneinrichtung derart von dem Befestigungselement entkoppelt, dass das Befestigungselement freigegeben wird.

Die europäische Patentanmeldung EP 1 265 022 A2 zeigt eine schwingungsgedämpfte Aufhängung zur Lagerung einer Maschine, in welcher die Maschine in einer Gummitülle gehalten ist, die zwei fluchtende Aussparungen aufweist, von denen eine in Verbindung mit einer kegelstumpfförmigen Erweiterung eine Sicherungseinrichtung bereitstellt, durch welche wirkungsvoller verhindert werden kann, insbesondere auch beim Transport der Maschine, dass die Maschine aus der Gummitülle herausrutscht, als wenn nur eine Aussparung vorgesehen wäre.

Des Weiteren offenbart die EP 0 044 985 A1 ein Verfahren zum Befestigen von wenigstens einen Befestigungsdorn mit hinterschnittener Spitze aufweisenden Haltern für biegsame Kunststoffrohre an der aus einem Aluminiumblech gebildeten, oberen Abdeckung der unteren Schaumkunststoff-Isolierung einer Fußbodenheizung.

Es ist Aufgabe der Erfindung, ein Rohr zum Verbauen in einem Kraftwagen bereitzustellen, bei dem sich defekte Halteschenkel einfach und kostengünstig ersetzen lassen.

Diese Aufgabe wird durch ein Rohr, welches die Merkmale des Patentanspruchs 1 aufweist, gelöst.

Ein erfindungsgemäßes, als Rohr zum Verbauen in einem Kraftwagen ausgebildetes Bauteil weist einen Wandbereich auf, an dem Halteschenkel fest angebracht sind. Bei dem Wandbereich kann es sich um eine Innen- oder Außenwand des Bauteils handeln. Der Wandbereich kann beliebige Form aufweisen; er muss insbesondere nicht eben, sondern kann auch gekrümmt sein. Die mit dem Wandbereich fest verbundenen Halteschenkel sind elastisch voneinander weg spreizbar, d. h. unter geeigneter Krafteinwirkung können sie sich so verformen, dass zumindest abschnittsweise ihre Beabstandung zunimmt. Fällt die Krafteinwirkung weg, so sind sie in der Lage, in ihrer Ausgangsposition zurückzukehren bzw. ihre ursprüngliche Form wieder anzunehmen. Auf diese Weise kann eine Clipverbindung hergestellt werden. Das erfindungsgemäße Bauteil umfasst ferner eine als Reparaturlösung vorgesehene Aussparung, die räumlich zwischen den Halteschenkeln ausgebildet ist und die dazu ausgelegt ist, dass in sie ein vorbestimmtes Befestigungselement eingebracht werden kann. Dieses Befestigungselement kann zumindest dann in der Aussparung verankert werden, wenn die Halteschenkel entweder defekt und/oder wenigstens abschnittsweise nicht vorhanden sind. Die Halteschenkel sind insbesondere dann defekt, wenn sie nicht mehr elastisch beweglich sind. Sie sind zumindest abschnittsweise dann nicht mehr vorhanden, wenn von ihnen Stücke abgebrochen sind oder sonst wie nicht mehr vorliegen. Die Aussparung liegt räumlich zwischen den Halteschenkeln und kann dabei z. B. durch eine Öffnung, eine Einbuchtung oder ein Loch im Wandbereich gebildet sein. Ein vorbestimmtes Befestigungselement ist vorzugsweise komplementär zur Aussparung ausgebildet. Ist die Aussparung beispielsweise ein zylinderförmiges Loch, eignet sich als vorbestimmtes Befestigungselement ein Teil mit einem zylinderförmigen Schaft, der im Durchmesser kleiner oder gleich dem Durchmesser der zylinderförmigen Aussparung ist. Das Befestigungselement lässt sich dann in die Aussparung verankerbar einbringen, wenn sein Ausbringen aus der Aussparung zumindest in einer Raumrichtung gehemmt ist. Halteschenkel sind Bauelemente, die dazu in der Lage sind, ein anderes Bauelement festzuhalten bzw. sein Verbringen in eine andere Position zu hemmen. Insbesondere können die Halteschenkel als sogenannte Clipschenkel ausgebildet sein, mit Hilfe derer sich eine Clipverbindung herstellen lässt.

Durch die für ein vorbestimmtes Befestigungselement vorgesehene Aussparung wird erreicht, dass auch bei defekten oder nicht vorhandenen Halteschenkeln die Haltefunktion von dem Befestigungselement übernommen werden kann. Sind die Halteschenkel defekt, z. B. abgebrochen, wird die Aussparung für das Befestigungselement zugänglich, so dass es gegebenenfalls in der Lage ist, die defekten Halteschenkel zu ersetzen. Es bildet dann ein Ersatzteil. Hierzu sind vorzugsweise zu den Halteschenkeln äquivalente Halteelemente am Befestigungselement angebracht, die in der Lage sind, die Funktion der defekten Halteschenkel zumindest teilweise zu übernehmen. Die vorgesehene Aussparung eröffnet damit die Option, defekte Halteschenkel einfach, unproblematisch und kostengünstig zu ersetzen.

Wenn Bauteil und Halteschenkel einstückig gefertigt sind, muss insbesondere bei abgebrochenen Halteschenkeln nicht mehr das gesamte Bauteil ersetzt werden. Stattdessen kann z. B. ein Ersatzclip in der vorgehaltener Aussparung angebracht werden, der die Aufgabe der defekten Halteschenkel übernimmt. Gegebenenfalls kann hierzu die Aussparung in einem zusätzlichen Schritt bearbeitet werden, um eine Verankerung des Befestigungselements zu erleichtern oder zu verbessern; z. B. kann nachträglich ein Gewinde in die Aussparung geschnitten werden. Das erfindungsgemäße Bauteil ermöglicht damit eine unkomplizierte und ökonomische Ersatzteillösung.

Die Aussparung kann beliebig sein, solange sich ein vorbestimmtes Befestigungselement verankerbar in sie einbringen lässt. Vorzugsweise wird die Aussparung jedoch von einem Element bereitgestellt, das von den Halteschenkeln und den Wandbereich verschieden ist. Das für die Reparaturlösung vorgesehene Element ist dann unabhängig von den Halteschenkeln und dem Wandbereich. Ein Defekt bzw. ein Abbrechen der Halteschenkel wird dann die Funktion des Elements nicht oder nur wenig beeinträchtigen, so dass die Option für eine Reparaturlösung aufrechterhalten bleibt. Eine bauliche Abgrenzung zwischen Element einerseits und Wandbereich andererseits erlaubt darüber hinaus, dass das Element mit der Aussparung an beliebigen Wandbereichen einfach ergänzt werden kann. Ein von einem Wandbereich verschiedenes Element ist beispielsweise auf diesem aufgesetzt und/oder dringt in diesen teilweise ein.

Weiterhin ist es bevorzugt, dass das Element mit der Aussparung zusammen mit dem Wandbereich einstückig ausgeführt ist. Zusätzlich oder alternativ können auch das Element und die Halteschenkel einstückig ausgeführt sein. Diese Ausführungsform des Bauteils ist robust und dabei sehr einfach herzustellen. Im Falle einer einstückigen Ausführung von Element und Wandbereich ist das Element am Wandbereich sicher fixiert. Sind z. B. die Halteschenkel verloren gegangen und kommt die Reparaturlösung zum Einsatz, ist so eine nahezu äquivalent starke Anbringung des Befestigungselements am Wandbereich garantiert. Besonders kostengünstig und einfach herzustellen ist eine Ausführungsform, bei der alle drei Bauteilkomponenten, nämlich Element, Halteschenkel und Wandbereich, einstückig ausgeführt sind. Für die Verbindung des Elements mit dem Wandbereich und/oder den Halteschenkeln können bei einer einstückigen Ausführung insbesondere zusätzliche Fixierhilfsmittel, wie z. B. Klebstoffe, Schrauben, Nieten usw. entfallen.

Besonders bevorzugt ist es, wenn das Element am Wandbereich und/oder an den Halteschenkeln als angespritzter Anguss ausgeführt ist, bzw. durch Spritzgießen bzw. in Spritzgusstechnik hergestellt ist. Die Technik des Spritzgießens ist insbesondere für in Masse gefertigte Kunststoffteile ökonomisch und dabei sehr präzise. Es wird eine besonders feste Verbindung des Elements mit dem Wandbereich bzw. mit den Halteschenkeln garantiert. Vorzugsweise ist das gesamte Bauteil mit den Halteschenkeln, dem Wandbereich und dem Element in Spritzgusstechnik einstückig gefertigt. Dann tritt der Vorteil des vorliegenden Bauteils besonders zutage. Defekte oder abgebrochene Halteschenkel lassen sich hier nur schwer ersetzen. In diesem Fall steht die vorgehaltene Aussparung zur Verfügung, um ein externes Befestigungselement, z. B. einen Clip, zu verankern und damit eine Ersatzlösung für die abgebrochenen Halteschenkel bereitzustellen.

Es ist ferner bevorzugt, dass das Element ein Innengewinde aufweist. Ein solches Innengewinde garantiert eine besonders einfache Verankerung des vorbestimmten Befestigungselements in der Aussparung. Beispielsweise kann das vorbestimmte Befestigungselement mit einem Außengewinde versehen sein, welches komplementär zum Innengewinde des Elements ausgebildet ist. Dann kann das Befestigungselement in die Aussparung eingeschraubt werden. Alternativ kann eine feste Verankerung durch Einstecken eines dübelartigen Befestigungselements mit Tannenbaumprofil, wie es z. B. aus der DE 101 46 565 A1 bekannt ist, erreicht werden.

Darüber hinaus kann vorzugsweise vorgesehen sein, dass das Element aus einem elastomeren Werkstoff, z. B. einem Kunststoff, hergestellt ist. Eine Ausführung in Kunststoff ist nicht nur sehr preiswert, sondern auch für die Herstellung durch Spritzgießen prädestiniert. Da die Halteschenkel elastisch voneinander weg spreizbar sein müssen, bietet sich für sie als Material ein elastischer Kunststoff an. Es ist dann einfach und unkompliziert, auch das zwischen den Halteschenkeln vorgesehene Element aus demselben Kunststoff herzustellen.

Weiterhin ist vorzugsweise das Element als Rohransatz ausgebildet. Ein Rohransatz ist einerseits durch eine im Umfang geschlossene Querschnittskontur charakterisiert; andererseits besitzt er eine Öffnung, deren Volumen groß gegenüber dem Volumen der Rohrwandung ist. Ein Rohransatz ist damit ein Element, das eine vergleichsweise großflächige Innenwand zur Verfügung stellt. Damit wird es besonders einfach, das vorbestimmte Befestigungselement in der von der Innenwand begrenzten Aussparung zu verankern. Zudem ist ein Rohransatz z. B. in Form eines Butzens mit Bohrung technisch sehr einfach zu realisieren.

Vorzugsweise ist die Aussparung des Bauteils zumindest abschnittsweise von einer kreisrunden Querschnittskontur begrenzt. Dies ist z. B. dann der Fall, wenn die Aussparung zumindest abschnittsweise durch eine zylinderförmige Öffnung gebildet ist. Zylinderförmige Öffnungen lassen sich technisch, z. B. durch eine Bohrung, sehr einfach realisieren. Da auch externe Befestigungselemente typischerweise mit im Querschnitt kreisrunden Schaften bzw. Zapfen versehen sind, lassen sich diese im Falle einer kreisrunden Aussparung besonders einfach in ihr verankern. Darüber hinaus lässt sich auch der Durchmesser einer kreisrunden Querschnittskontur vergleichsweise einfach variieren.

Bei dem Bauteil handelt es sich vorzugsweise um ein im Kraftwagen verbautes Rohr. Ein solches Rohr kann z. B. ein Saugrohr eines Motors sein. An einem solchen Saugrohr werden nämlich verschiedene Sensoren und Leitungen über Clipverbindungen angebracht. Da Clipschenkel vergleichsweise einfach abbrechen können und damit ein Ersatz des gesamten Saugrohres nötig würde, ist eine Vorhaltung von Aussparungen für alternativ anzubringende Clipelemente besonders vorteilhaft.

Anhand eines Ausführungsbeispiels wird die Erfindung im Folgenden näher erläutert. Es zeigen:
- Fig. 1: eine perspektivische Darstellung eines Saugrohrs für einen Kraftwagen als Ausführungsbeispiel eines erfindungsgemäßen Bauteils;
- Fig. 2: eine perspektivische Darstellung eines Ausschnitts eines erfindungsgemäßen Bauteils mit zwei Halteschenkeln und einem dazwischenliegenden Rohransatz;
- Fig. 3A: eine Schnittdarstellung des Bauteils aus Fig. 2 gemäß Linie IIIA-IIIA in Fig. 2; und
- Fig. 3B: eine schematische Schnittdarstellung auf das Bauteil aus Fig. 2 gemäß Linie IIIB-IIIB in Fig. 2.

In den Figuren werden gleiche oder funktionsgleiche Elemente mit den gleichen Bezugszeichen versehen.

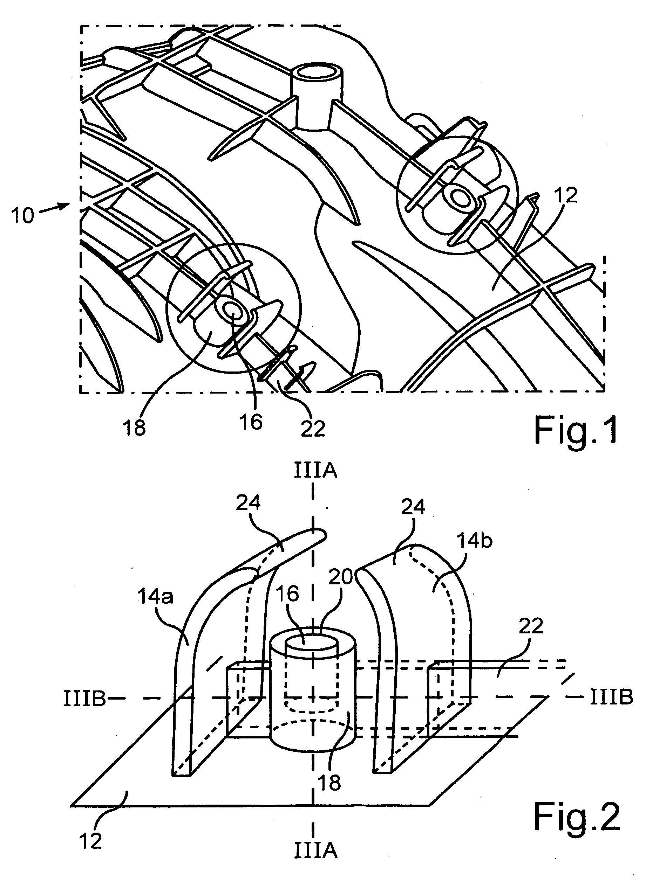

Fig. 1 zeigt ein Saugrohr 10, wie es in Kraftwägen eingesetzt wird. Das Saugrohr 10 ist von einem Wandbereich 12 begrenzt, auf dem mehrere funktionale und formgebende Elemente angebracht sind. Innerhalb der durch Kreise markierten Bereiche sind jeweils zwei Halteschenkel 14a und 14b sowie ein zwischen ihnen angebrachter Rohransatz 18 mit einer kreisförmigen Aussparung 16 zu erkennen. Sowohl die Halteschenkel 14a, 14b als auch der Rohransatz 18 sind symmetrisch bzgl. einer am Wandbereich 12 des Saugrohrs 10 verlaufenden Schiene 22 angebracht.

Bei den Halteschenkeln 14a und 14b handelt es sich im Ausführungsbeispiel um sogenannte Clipschenkel, die dafür vorgesehen sind, weitere Bauteile, z. B. Sensoren oder eine Kraftstoffvorlaufleitung, mit dem Saugrohr 10 zu verbinden und sie an diesem festzuhalten. Zwischen den beiden Clip- bzw. Halteschenkeln 14a und 14b wird eine Aussparung 16 durch die Bohrung eines Butzens gebildet. Der Butzen mit Bohrung bildet den Rohransatz 18. Das Saugrohr 10 ist im Ausführungsbeispiel aus Kunststoff gefertigt, wobei insbesondere der Wandbereich 12 und die an ihm befestigten Elemente, z. B. die Halteschenkel 14a, 14b, der Rohransatz 18 sowie die Schiene 22, aus diesem Material bestehen. Die Halteschenkel 14a, 14b und der Rohransatz 18 sind an dem Wandbereich 12 angespritzt, wodurch sich das Saugrohr 10 besonders einfach, unkompliziert und kostengünstig herstellen lässt.

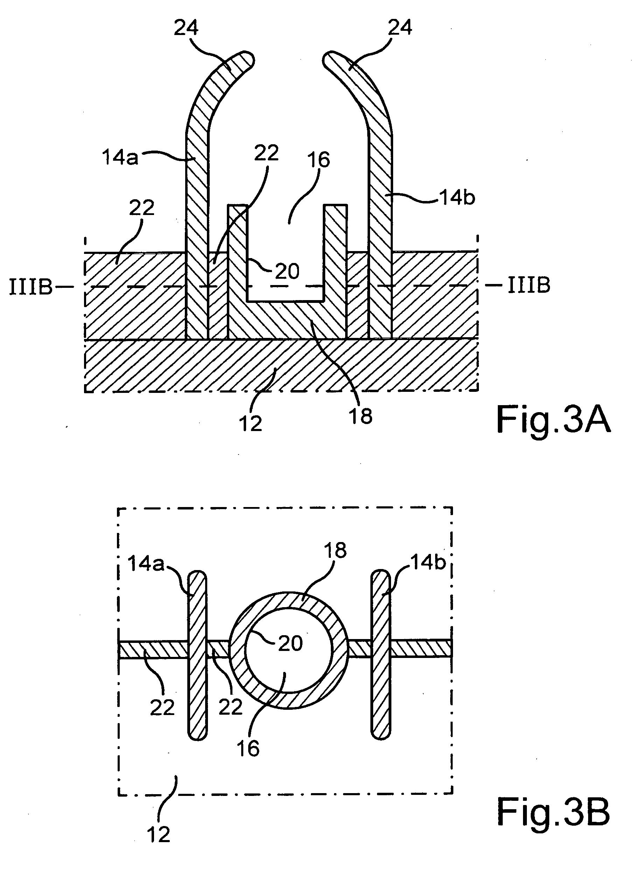

Fig. 2 zeigt einen Ausschnitt des Bauteils aus Fig. 1 in dreidimensionaler Darstellung. Zugehörige Schnittdarstellungen entlang der Linien IIIA-IIIA und IIIB-IIIB sind in den Figuren 3A bzw. 3B wiedergegeben.

Die Halteschenkel 14a, 14b sind mit dem Wandbereich 12 fest verbunden. Der Einfachheit halber ist der Wandbereich 12 im Ausführungsbeispiel als flache Ebene dargestellt. Er kann prinzipiell jedoch jede beliebige Form bzw. Krümmung aufweisen. Die Halteschenkel 14a, 14b und der Wandbereich 12 sind mittels des Spritzgießens bzw. Spritzgussverfahrens einstückig aus Kunststoff gefertigt. Hierdurch ist auch sichergestellt, dass die Halteschenkel 14a, 14b elastisch beweglich sind, da die meisten Kunststoffe sehr gute elastische Eigenschaften aufweisen.

Im Ausführungsbeispiel sind zwei Halteschenkel 14a und 14b vorhanden, die zumindest in einem Teilbereich im Längsschnitt rechteckig sind (vgl. Fig. 3A). An den jeweiligen rechteckigen Teilbereich schließen sich gekrümmte Endbereiche 24 an. Hierdurch kann eine aus dem Stand der Technik bekannte Clipverbindung hergestellt werden. Wird eine Komponente, z. B. eine Rohrleitung, in Richtung hin zum Wandbereich 12 zwischen die Halteschenkel 14a und 14b eingeführt, sind diese in der Lage, elastisch voneinander zurückzuweichen, so dass die Komponente in den Raum zwischen ihnen gelangen kann. Die elastischen Halteschenkel 14a, 14b gehen dann in ihre Ausgangslage zurück und fixieren so die Komponente. Alternativ zum dargestellten Ausführungsbeispiel können auch mehr als zwei Halteschenkel vorhanden sein, die nicht identisch ausgebildet sein müssen. Auch die Konturen der Halteschenkel 14a, 14b im Schnitt können beliebig sein, solange sich eine Clipverbindung herstellen lässt. Die Halteschenkel 14a, 14b können auch aus einem anderen Material als Kunststoff, z. B. Metallblech, ,hergestellt sein.

Räumlich mittig zwischen den Halteschenkeln 14a und 14b befindet sich eine Aussparung 16, in die sich ein vorbestimmtes Befestigungselement wenigstens dann verankerbar einbringen lässt, wenn die Halteschenkel 14a, 14b defekt oder zumindest abschnittsweise nicht vorhanden sind. Im Ausführungsbeispiel der Figuren 2, 3A und 3B wird diese Aussparung 16 durch ein Element, nämlich einen Rohransatz 18, bereitgestellt, der von den Halteschenkeln 14a, 14b und dem Wandbereich 12 verschieden ist. Der Rohransatz 18 ist aus Kunstoff hergestellt und durch Spritzgießen mit dem Wandbereich 12 verbunden. Der Rohransatz 18 ist zylinderförmig und bzgl. einer auf dem Wandbereich 12 senkrecht stehenden Achse rotationssymmetrisch. Seine Aussparung 16 ist ebenfalls zylinderförmig ausgebildet. Die zylinderförmige Aussparung 16 als auch der zylinderförmige Rohransatz 18 sind zueinander zentriert, bzw. besitzen dieselbe Zylinder- bzw. Rotationsachse. Die in axialer Richtung bemessene Tiefe der zylinderförmigen Aussparung 16 ist geringer als die ebenfalls in axialer Richtung bemessene Höhe des zylinderförmigen Rohransatzes 18. Durch die Aussparung 16 besitzt der Rohransatz 18 eine Innenwand 20, die im Ausführungsbeispiel glatt ist.

Auch andere nicht dargestellte Ausführungsformen für die zwischen den Halteschenkeln 14a, 14b gelegene Aussparung 16 sind möglich. So kann beispielsweise der Rohransatz 18 vollständig entfallen, wobei sich eine Aussparung zwischen den Halteschenkeln 14a und 14b im Wandbereich 12 ergibt. Die Aussparung 16 wäre dann eine Öffnung, ein Loch oder eine Vertiefung im Wandbereich 12. Sie könnte dann wiederum z. B. im Schnitt kreisförmig ausgeführt sein und mit einem Innengewinde versehen sein. Die Aussparung 16 kann in Form einer Durchgangsöffnung oder eines Sacklochs vorgesehen sein. Die Aussparung 16 kann auch von einem Element bereitgestellt werden, das von den Halteschenkeln 14a, 14b und vom Wandbereich 12 verschieden ist, jedoch konstruktive Bereiche mit diesen teilt. So können beispielsweise die Halteschenkel 14a, 14b fließend in die Wandung des Rohransatzes 18 übergehen oder es kann die Innenwand 20 des Rohransatzes 18 zumindest teilweise von den Halteschenkeln 14a, 14b gebildet werden. Es ist auch möglich, dass der Rohransatz 18 und der Wandbereich 12 nicht direkt miteinander verbunden sind, sondern der Rohransatz 18 an den Halteschenkeln 14a, 14b befestigt ist.

Der wesentliche Vorteil des vorliegenden Bauteils ergibt sich dann, wenn die Halteschenkel 14a, 14b, z. B. durch häufiges elastische Verformen Sprödbruch erleiden und dadurch defekt oder abgebrochen sind. Dann stehen sie für weitere Clipverbindungen nicht mehr zur Verfügung und müssen ausgetauscht werden. Sind die Halteschenkel 14a, 14b jedoch mit dem Wandbereich 12 einstückig ausgeführt, ist dies nicht ohne weiteres möglich, so dass z. B. das gesamte Saugrohr 10 ausgetauscht werden muss. Um eine ökonomische Lösung bereitzustellen, ist der Rohransatz 18 mit der Aussparung 16 vorgesehen. In ihn lässt sich ein vorbestimmtes Befestigungselement verankerbar einbringen, welches dann z. B. die entfallenen Halteschenkel 14a, 14b ersetzen kann.

Beispielsweise weist ein solches Befestigungselement einen Schaft mit einem Tannenbaumprofil oder einem Außengewinde auf und kann dann dübelartig oder durch Einschrauben in der Aussparung 16 des Rohransatzes 18 fixiert werden. Nachdem das Befestigungselement parallel zur Zylinderachse in die Aussparung 16 des Rohransatzes 18 eingebracht ist, wird es durch die Innenwand 20 an einer lateralen Bewegung behindert. In axialer Richtung kann es durch bewährte Ausgestaltungen mit z. B. einem Gewinde, Spreizelementen, Haltehäkchen und Ähnlichem fixiert werden. An dem Schaft können dann z. B. zu den Halteschenkeln 14a, 14b identische Halteschenkel angebracht werden, die diese ersetzen. Im Ausführungsbeispiel ist die Innenwand 20 des Rohransatzes 18 dafür ausgelegt, dass nachträglich ein Gewinde geschnitten und so die Verankerung des Befestigungselements verbessert werden kann.

## Patentansprüche

1. Rohr (10) zum Verbauen in einem Kraftwagen, mit einem Wandbereich (12) und mit elastisch voneinander weg spreizbaren Halteschenkeln (14a, 14b) zum Herstellen einer Clipverbindung, die mit dem Wandbereich (12) fest verbunden sind
**gekennzeichnet durch**
eine räumlich zwischen den Halteschenkeln (14a, 14b) gelegene und als Reparaturlösung vorgesehene Aussparung (16), in die sich ein vorbestimmtes Befestigungselement wenigstens dann verankerbar einbringen lässt, wenn die Halteschenkel (14a, 14b) defekt oder zumindest abschnittsweise nicht vorhanden sind.

2. Rohr (10) nach Anspruch 1,
**dadurch gekennzeichnet, dass**
die Aussparung (16) von einem Element (18) bereitgestellt wird, das von den Halteschenkeln (14a, 14b) und dem Wandbereich (12) verschieden ist.

3. Rohr (10) nach Anspruch 2,
**dadurch gekennzeichnet, dass**
das Element (18) und der Wandbereich (12) und/oder das Element (18) und die Halteschenkel (14a, 14b) einstückig ausgeführt sind.

4. Rohr (10) nach Anspruch 2 oder 3,
**dadurch gekennzeichnet, dass**
das Element (18) als am Wandbereich (12) und/oder an den Halteschenkeln (14a, 14b) angespritzter Anguss ausgeführt ist.

5. Rohr (10) nach einem der Ansprüche 2 bis 4,
**dadurch gekennzeichnet, dass**
das Element (18) ein Innengewinde aufweist.

6. Rohr (10) nach einem der Ansprüche 2 bis 5,
**dadurch gekennzeichnet, dass**
das Element (18) aus einem elastomeren Werkstoff besteht.

7. Rohr (10) nach einem der Ansprüche 2 bis 6,
**dadurch gekennzeichnet, dass**
das Element (18) ein Rohransatz ist.

8. Rohr (10) nach einem der vorhergehenden Ansprüche,
**dadurch gekennzeichnet, dass**
die Aussparung (16) zumindest abschnittsweise von einer kreisrunden Querschnittskontur begrenzt ist.

## Claims

1. Tube (10), for installing in a motor vehicle, with a wall section (12) and retaining legs (14a, 14b) rigidly connected to the wall section (12) and constructed to be elastically spread apart, for providing a clip connection,
**characterized by**
a recess (16) disposed between the retaining legs (14a, 14b) and provided as repair solution, a predetermined fastening element being insertable into the recess and anchored therein at least when the retaining legs (14a, 14b) are defective or are at least partially missing.

2. Tube (10) according to claim 1,
**characterized in that**
the recess (16) is provided by an element (18) different from the retaining legs (14a, 14b) and the wall section (12).

3. Tube (10) according to claim 2,
**characterized in that**
the element (18) and the wall section (12) and/or the element (18) and the retaining legs (14a, 14b) are formed as one piece.

4. Tube (10) according to claim 2 or 3,
**characterized in that**
the element (18) is formed as a sprue that is integrally molded on the wall section (12) and/or on the retaining legs (14a, 14b).

5. Tube (10) according to any of claims 2 to 4,
**characterized in that**
the element (18) has an internal thread.

6. Tube (10) according to any of claims 2 to 5,
**characterized in that**
the element (18) is made from an elastomeric material.

7. Tube (10) according to any of claims 2 to 6,
**characterized in that**
the element (18) is a pipe socket.

8. Tube (10) according to any of the preceding claims,
**characterized in that**
the recess (16) is at least partially delimited by a circular cross-sectional contour.

## Revendications

1. Tube (10) à monter dans un véhicule automobile, comprenant une zone de paroi (12) et des branches de maintien (14a, 14b) pouvant être écartées les unes des autres élastiquement servant à fabriquer un assemblage par clipsage, qui est relié de manière solidaire à la zone de paroi (12),
**caractérisé par**
un évidement (16) placé spatialement entre les branches de maintien (14a, 14b) et prévu en tant que solution de réparation, dans lequel un élément de fixation prédéterminé peut alors venir en prise au moins par ancrage lorsque les branches de maintien (14a, 14b) sont défectueuses ou ne sont pas présentes au moins par endroits.

2. Tube (10) selon la revendication 1,
**caractérisé en ce**
**que** l'évidement (16) est fourni par un élément (18), qui est différent des branches de maintien (14a, 14b) et de la zone de paroi (12).

3. Tube (10) selon la revendication 2,
**caractérisé en ce**
**que** l'élément (18) et la zone de paroi (12) et/ou l'élément (18) et les branches de maintien (14a, 14b) sont réalisés d'un seul tenant.

4. Tube (10) selon la revendication 2 ou 3,
**caractérisé en ce**
**que** l'élément (18) est réalisé sous la forme d'un culot d'injection au niveau de la zone de paroi (12) et/ou au niveau des branches de maintien (14a, 14b).

5. Tube (10) selon l'une quelconque des revendications 2 à 4,
**caractérisé en ce**
**que** l'élément (18) présente un filetage intérieur.

6. Tube (10) selon l'une quelconque des revendications 2 à 5,
**caractérisé en ce**
**que** l'élément (18) est constitué d'un matériau élastomère.

7. Tube (10) selon l'une quelconque des revendications 2 à 6,
**caractérisé en ce**
**que** l'élément (18) est un ajutage.

8. Tube (10) selon l'une quelconque des revendications précédentes,
**caractérisé en ce**
**que** l'évidement (16) est délimité au moins par endroits par un contour de section transversale rond circulaire.
